# FASCICULE DE BREVET EUROPEEN

(11) **EP 2 659 766 B1**
(45) Date de publication et mention de la délivrance du brevet: **13.09.2017**
(21) Numéro de dépôt: 13166303.1
(22) Date de dépôt: 02.05.2013
(51) Int. Cl.: A01G 3/04, A01D 34/86

(54) **Taille haie à conducteur marchant**
Heckenschneider mit mitlaufendem Bediener
Walk-behind hedge-clipper

(30) Priorité: 02.05.2012 FR 1254022
(43) Date de publication de la demande: 06.11.2013
(73) Titulaire: Brossard Motoculture Sarl, 79100 Thouars (FR)
(72) Inventeur: Brossard, André, 79300 Bressuire (FR)
(74) Mandataire: Ipside

(56) Documents cités:
- WO-A1-92/11749
- WO-A1-98/06251
- GB-A- 2 055 284
- US-A- 4 996 830

## Description

La présente invention appartient au domaine de l'entretien des espaces verts.

Plus particulièrement l'invention concerne un dispositif pour la taille des haies végétales.

Dans le domaine de l'entretien des espaces verts, la taille des haies végétales, décoratives ou coupe vent, est une activité à part entière qui se caractérise entre autre par le fait que le travail de taille doit être réalisé sur une hauteur significative depuis le sol jusqu'à une hauteur pouvant dépasser deux ou même trois mètres à partir du sol, sur une longueur importante, généralement quelque dizaines à quelques centaines de mètres pour une seule haie, et également suivant une épaisseur de la haie.

Si historiquement la taille des haies végétales était réalisée à l'aide d'une cisaille à main, cette solution est aujourd'hui largement délaissée au profit de matériels mécaniques permettant des gains de temps et de fatigues significatifs.

Une solution connue consiste à utiliser une cisaille dont les lames sont entraînées mécaniquement par un moteur, électrique ou thermique, cette cisaille étant manipulée à la main. En orientant et en déplaçant la cisaille tenue à bout de bras, un opérateur peut ainsi tailler les végétaux d'une haie pour donner à la haie la forme souhaitée.

Cependant cette solution qui s'avère légère et peut coûteuse ne permet de tailler les haies que dans les limites des volumes pouvant être atteints par l'opérateur, et la nécessité de tenir la cisaille à bout de bras s'avère extrêmement fatiguant pour l'opérateur et limitée en termes d'efficacité.

Pour éviter à l'opérateur de porter la cisaille, il a été imaginé de fixer la cisaille sur un support mobile se déplaçant au sol sur des roues et poussé ou guidé par l'opérateur. On trouve un exemple d'un tel dispositif dans le brevet US 3703803 dans lequel une cisaille est fixée sur un mat solidarisé à une tondeuse à gazon poussée par un opérateur. Cette solution, utilisée principalement pour les haies ornementales, permet de tailler la partie supérieure d'une haie à une hauteur donnée par le réglage de la position de la cisaille sur le mat mais s'avère peu pratique du fait d'un support instable et du fait que le haut de la haie ainsi taillé suit le sol et ses irrégularités ce qui produit un effet inesthétique lorsque le sol n'est pas régulier.

Lorsque le travail de taille à réaliser représente une charge de travail plus importante, il est également connu des véhicules conduit depuis une place de conducteur porté équipé d'un bras rigide, comme dans la demande de brevet FR2942370, ou mobile, comme dans la demande de brevet FR2821523, porteur de lames ou de cisailles. Suivant le cas, le bras est fixé à l'arrière, sur le côté ou à l'avant du véhicule, généralement un tracteur agricole conventionnel sur lequel est adapté un montage du bras et qui apporte l'énergie pour entraîner les lames ou les cisailles et pour mouvoir le bras. Dans ce type de dispositif, utilisé principalement pour l'entretien des haies végétales agricoles, le conducteur du véhicule doit assurer simultanément la conduite du tracteur sur lequel il est installé et la gestion du bras pour réaliser la taille voulue.

Lorsque le bras est fixé à l'arrière ou sur le côté du tracteur, le conducteur est alors obligé de se tourner latéralement ou vers l'arrière pour surveiller le travail qu'il réalise tout en veillant à assurer une trajectoire correcte du déplacement simultané du tracteur. Le travail s'avère alors très fatigant pour l'opérateur qui se trouve limité dans ses capacités à assurer un travail de taille en continu sur une longue durée.

Lorsque le bras est fixé à l'avant, comme par exemple par les solutions décrite dans les demandes de brevet WO 98/06251 et WO 92/11749, la masse du bras et des lames a tendance à déséquilibrer le tracteur et les mouvements latéraux générés par les irrégularités du terrain et par les efforts de la taille, déjà présent avec un bras articulé arrière ou latéral, sont amplifiés et rendent les conditions de travail de l'opérateur inconfortables et fatigantes.

En outre, les tracteurs utilisés dans ces solutions sont nécessairement de dimensions suffisantes pour porter l'opérateur et pour présenter une masse et une stabilité minimale pour éviter un basculement lorsque le bras est déployé. De ce fait il n'est pas possible d'utiliser de tels dispositifs de manière efficace dans des endroits étroits ou lorsque qu'il doit être emprunté un passage étroit pour accéder à la haie à tailler.

L'invention apporte une solution efficace à ces différents problèmes des solutions connues.

Le dispositif de l'invention est un dispositif à conducteur marchant pour la taille des haies végétales, comme décrit dans la revendication 1, comportant une plate-forme automobile avec deux roues principales couplées à un moteur, au moins une roue secondaire orientable et un bras articulé qui est solidaire de la plate-forme et articulé dans un plan du bras sensiblement vertical et sensiblement perpendiculaire à un axe longitudinal X du dispositif.

Le dispositif comporte un poste de conduite pour le conducteur marchant à l'arrière de la plateforme et le bras articulé est solidaire de la plateforme en avant du poste de conduite.

Le bras articulé comporte :
- un premier segment sensiblement vertical, mobile en rotation par rapport au châssis de la plate-forme autour d'un axe d'articulation d'inclinaison sensiblement parallèle à l'axe longitudinal X de la plate-forme de sorte à permettre une inclinaison latérale du premier segment entre des positions inclinées situées de part et d'autre d'une position verticale ;
- un deuxième segment, articulé sur le premier segment autour d'un axe d'articulation d'épaule, également sensiblement parallèle à l'axe longitudinal X de la plate-forme, pour former un angle d'épaule modifiable entre le premier et le deuxième segment, l'angle d'épaule s'ouvrant en direction du côté de la plate-forme où se trouve les moyens de coupe lors de l'utilisation du dispositif ;
- dans un mode de réalisation pour étendre les capacités du bras articulé, un troisième segment, articulé sur le deuxième segment autour d'un axe d'articulation de coude sensiblement parallèle à l'axe longitudinal X de la plate-forme pour former un angle de coude modifiable entre le deuxième et le troisième segment.

En outre les moyens de coupe, dont une longueur détermine sensiblement la largeur de coupe du dispositif, sont articulés sur l'extrémité libre du bras, c'est à dire l'extrémité du deuxième segment opposée à l'axe d'articulation d'épaule ou l'extrémité du troisième segment opposée à l'axe d'articulation de coude, autour d'un axe d'articulation de poignet sensiblement parallèle à l'axe longitudinal X de la plate-forme pour former un angle de poignet modifiable entre le troisième segment et les moyens de coupe.

Le dispositif s'avère ainsi particulièrement compact et maniable tout en permettant de réaliser la taille de haie relativement haute.

L'angle d'inclinaison du premier segment est modifiable entre une position verticale à zéro degré et environ vingt degrés, en pratique une valeur comprise entre quinze degrés et trente degrés, de préférence de manière continue de sorte à pouvoir prendre des inclinaisons intermédiaires entre ces extrêmes, de chaque coté de la position verticale, non nécessairement de manière symétrique, dans un plan transversal sensiblement perpendiculaire à la direction longitudinale X. Il est ainsi possible par ce moyen en particulier de réaliser un déplacement des moyens de coupe sensiblement horizontalement lors du travail de taille. Il est également obtenu par ce moyen des possibilités de repliement du bras articulé dans une position stockée dans un volume minimisé.

Pour être en mesure d'obtenir de manière simple les positions souhaitées des moyens de coupe :
- l'angle d'épaule est modifiable entre une position fermée dans laquelle l'angle d'épaule est minimal, de valeur inférieure à quatre vingt dix degrés, et une position ouverte maximale dans la laquelle l'angle d'épaule est de valeur supérieure à quatre vingt dix degrés ;
- l'angle de coude est modifiable entre une position ouverte maximale dans laquelle l'angle de coude est égal ou supérieur à cent quatre vingt degrés et une position fermée dans laquelle l'angle de coude est strictement inférieur à cent quatre vingt degrés telle que l'axe de poignet est descendu par rapport à la position ouverte maximale ;
- l'angle de poignet est modifiable entre une position fermée dans lequel l'angle de poignet est minimal, de valeur inférieure ou égale à quarante cinq degrés, et une position ouverte maximale dans laquelle l'angle de poignet est égal ou supérieur à cent trente degrés, de préférence sensiblement cent quatre vingt degrés.

Dans une forme de réalisation, l'axe d'articulation d'épaule est mobile en hauteur sur le premier segment, par exemple sur un chariot mobile le long du premier segment. Par ce moyen il est possible d'étendre les possibilités du dispositif sans pénaliser sa compacité dans la position stockée et en limitant la longueur des deuxième et troisième segments. Par ce moyen il est également possible de réaliser un déplacement des moyens de coupe sensiblement verticalement lors du travail de taille.

Pour cela, l'axe d'articulation est déplacé au moyen d'un actionneur de levage et ou d'une came à actionnement manuel.

Afin de piloter le bras articulé depuis un tableau de commande à la disposition de l'utilisateur du dispositif, chacun des angles d'inclinaison, d'épaule, de coude et de poignet est modifié au moyen d'un actionneur, par exemple un vérin hydraulique ou autre prenant effet sur les deux parties articulées de l'angle considéré.

Pour améliorer la stabilité latérale du dispositif, éviter son renversement et lui procurer un meilleur équilibre latéral qui profite au confort de sa mise en oeuvre, un ou des équipements, principalement des équipements pesants, sont agencés sur le châssis déportés latéralement par rapport à l'axe de symétrie longitudinal du châssis du côté du châssis opposé au côté duquel est réalisé le travail de taille.

Afin de réaliser un déport supérieur au déport limité par la largeur de la plate-forme, un support d'équipements, sur lequel sont fixés les équipement déportés latéralement, est mobile latéralement, par exemple sur des glissières fixées au châssis. Par ce moyen il est possible dans une position stockée de limiter la largeur du dispositif et en utilisation de garantir un couple de rappel adapté.

Dans un soucis de simplifier l'utilisation du dispositif et surtout pour éviter qu'un utilisateur oublie de translater le support avant d'utiliser le dispositif, au risque de subir un renversement latéral, le support d'équipement est solidaire du premier segment de sorte à être déplacé latéralement sur le châssis dans la direction opposée au sens dans lequel le premier segment est incliné.

Un lest servant de contrepoids fixe ou amovible est si besoin également fixé au châssis ou fixé sur le support mobile.

Dans une forme de réalisation, la stabilité latérale est également augmentée au moyen d'une plateforme comportant deux roues secondaires agencées sur un essieu avant et déterminant une voie de l'essieu avant.

Pour augmenter encore plus la stabilité latérale, la voie de l'essieu avant comporte le cas échéant une position élargie d'un côté de la plate-forme correspondant au côté duquel est réalisé le travail de taille.

Le dispositif suivant l'invention est décrit en référence aux figures, non limitatives, qui représentent schématiquement un même exemple de réalisation dans différentes configurations :
- figure 1 :: une vue d'ensemble du dispositif vu depuis l'avant ;
- figure 2 :: une vue d'ensemble du dispositif vu depuis le côté droit correspondant au côté de la haie taillée lorsque le dispositif est utilisé ;
- figure 3 :: une vue simplifiée du dispositif, vu depuis l'arrière, avec le bras articulé déployé en position de travail avec le second segment du bras en position haute sur le premier segment et le lamier en position verticale ;
- figure 4 :: une vue simplifiée du dispositif, vu depuis l'arrière, avec le bras articulé déployé en position de travail avec le second segment du bras en position basse sur le premier segment et le lamier en position verticale ;
- figure 5 :: une vue simplifiée du dispositif, vu depuis l'arrière, avec le bras articulé déployé en position de travail avec le second segment du bras en position haute sur le premier segment, les deuxième et troisième segments en positions sensiblement horizontales et le lamier en position verticale ;
- figure 6 :: une vue simplifiée du dispositif, vu depuis l'arrière, avec le bras articulé déployé en position de travail avec le second segment du bras en position haute sur le premier segment, les deuxième et troisième segments en positions sensiblement horizontales et le lamier en position horizontale ;
- Figure 7 :: une vue simplifiée du dispositif, vu depuis l'arrière, avec le bras articulé en position stockée ; .

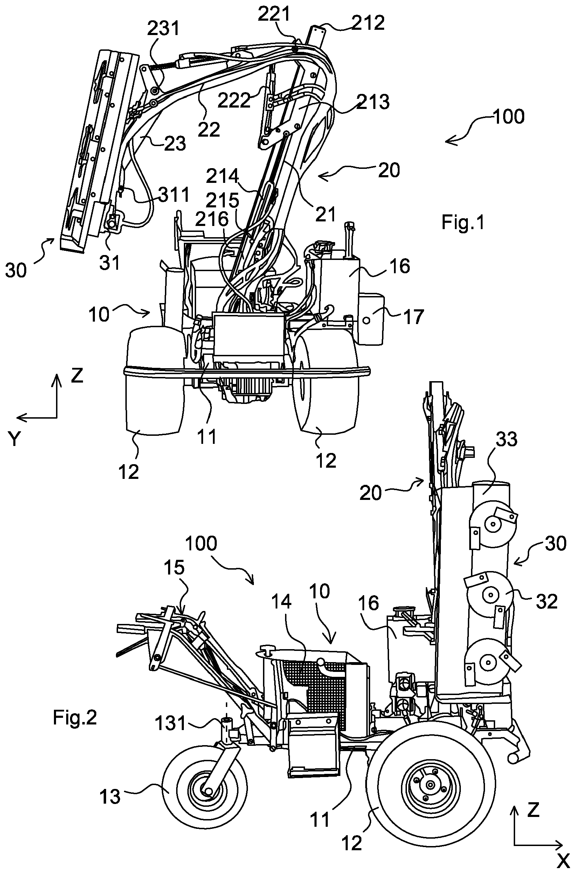

Un dispositif 100, illustré sur la figure 1 en vue arrière et sur la figure 2 en vue de côté, pour la taille des haies végétales suivant l'invention comporte :
- Une plate-forme 10 automobile ;
- des moyens de coupe 30 ;
- un bras articulé 20 solidaire de la plate-forme 10 et porteur des moyens de coupe 30.

Le dispositif 100 est conçu d'une part pour être mené en fonctionnement par un conducteur marchant à l'arrière du dispositif, avant et arrière du dispositif s'entendant ici suivant le sens du déplacement normal lorsque le travail de taille est en cours, et d'autre part pour que ledit dispositif ait des dimensions réduites par rapport à ses performances de sorte à pouvoir passer, sans démontage, par des passages relativement étroit et utilisé pour la taille de haie sur les bords desquelles la place disponible ne permet pas d'utiliser les moyens à conducteur porté conventionnels.

La plate-forme 10 automobile comporte de manière connue un châssis 11 principal sur lequel sont fixés la plupart des équipements du dispositif nécessaires ou utiles à son fonctionnement.

Le châssis est par exemple réalisé par une structure mécano-soudée en matériau métallique.

Comme illustré sur les vues d'ensemble du dispositif 100 des figures 1 et 2, le châssis est pourvu de roues 12, 13 et porte en particulier un moteur 14.

Deux roues principales 12 sont situées, dans l'exemple illustré, dans une partie avant du dispositif 100 et sont entraînées en rotation par le moteur 14, par exemple au moyen d'une transmission hydrostatique, de sorte à assurer une avance du dispositif sans effort par un conducteur, non représenté, qui contrôle le moteur et son couplage aux roues principales 12 par des commandes accessibles depuis un guidon 15 situé dans une partie arrière du dispositif et fixé de manière rigide au châssis 11.

Au moins une roue secondaire 13 est solidaire du châssis 11, dans l'exemple illustré, dans une partie arrière du dispositif 100.

La roue secondaire 13 est une roue orientable autour d'un axe de rotation 131 vertical. Le mouvement de rotation en orientation est libre autour dudit axe vertical de sorte que la roue secondaire 13 s'oriente automatiquement dans le sens du déplacement du dispositif 100 grâce à un montage du type à roue traînée.

Les roues d'un même essieu déterminent en particulier la voie de la plate-forme 10 qui est limitée ici pour permettre de déplacer le dispositif dans des passages étroits généralement réservés au passage de personnes. Avantageusement la largeur de la voie est limitée à 1,2 m qui correspond à une allée ordinaire, voire à un passage considéré comme minimal entre un avant et un arrière de maison.

Le conducteur du dispositif 100 est un conducteur marchant qui suit ledit dispositif en fonctionnement en assurant depuis un poste de conduite à l'arrière de la plateforme 10 le guidage en direction par des efforts latéraux sur le guidon 15.

Le guidon 15 prolonge le châssis 11, auquel il est fixé rigidement, vers l'arrière de manière suffisante pour permettre au conducteur marchant de se trouver suffisamment dégagé du dispositif de sorte à ne pas être gêné dans sa marche par la plate-forme 10 et les roues, pour bénéficier d'un recul suffisant pour surveiller le travail de taille qu'il réalise sans contorsion particulière, pour réaliser un guidage latéral sans effort excessif en profitant du bras de levier apporté par des bras du guidon.

Le guidon 15 comporte de manière connue des commandes permettant d'agir sur le moteur 14 pour en régler la puissance et pour engager les roues principales 12 afin d'obtenir la propulsion du dispositif 100.

Le moteur est un moteur 14 conventionnel de puissance adapté au travail à réaliser.

Outre la puissance nécessaire au déplacement pour entraîner les roues principales 12, le moteur 14 fournit la puissance nécessaire au fonctionnement du bras articulé 20 et des moyens de coupe 30.

La technologie du moteur 14 n'est pas imposée, mais dans l'état actuel des technologies économiquement adaptées, et compte tenu d'une indépendance souhaitée pour le dispositif par rapport à une source d'énergie extérieure au dispositif, une solution à moteur thermique est mise en oeuvre.

Une puissance de l'ordre de 12 à 15 KW s'avère suffisante pour assurer l'ensemble des fonctions du dispositif 100 dans l'exemple de réalisation décrit.

Le moteur 14 est couplé à une transmission hydrostatique qui entraîne les roues principales 12 lorsque la transmission est engagée et est couplé à une ou plusieurs pompes hydrauliques qui génèrent une puissance hydraulique pour alimenter d'une part des actionneurs, dans l'exemple de réalisation des vérins hydrauliques linéaires, du bras articulé 20 et d'autre part un moteur hydraulique des moyens de coupe 30.

Outre les composants fonctionnels déjà cités, la plate-forme 10 automobile comporte des équipements divers pour assurer le fonctionnement du moteur, de la transmission et des systèmes hydrauliques.

En particulier un réservoir hydraulique 16 est solidaire de la plate-forme 10.

Le bras articulé 20 est le support des moyens de coupe 30.

Sa fonction est de placer les moyens de coupe dans l'espace par rapport à la plate-forme 10, en position et en orientation.

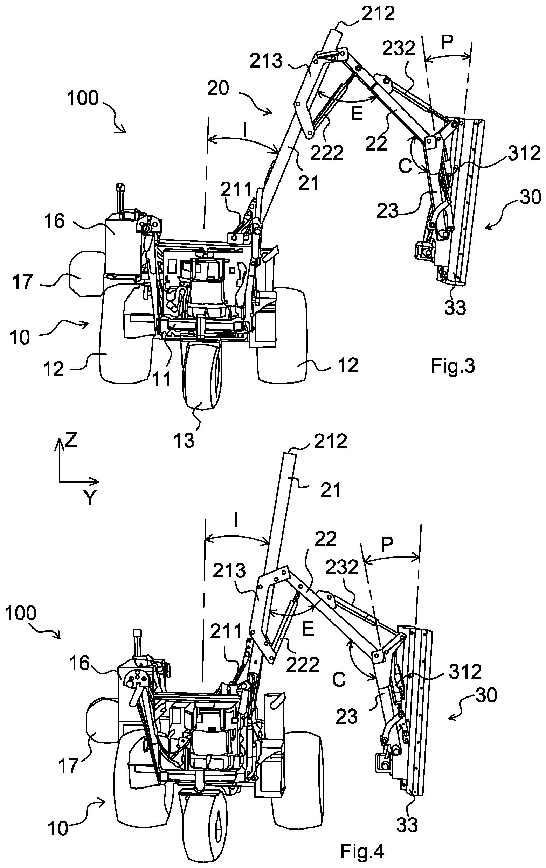

Les différentes figures, en particulier les figures 3 à 7 illustrent différentes positions des moyens de coupe en position de travail et du bras articulé.

Les vues sont représentées depuis l'arrière du dispositif 100, c'est à dire la vue qu'en aurait un conducteur dudit dispositif , ledit conducteur ayant ainsi la visibilité parfaite vers l'avant du dispositif et du bras articulé 20 situé devant lui. Dans l'exemple de réalisation illustré les moyens de coupe 30 sont placés sur le côté droit et le conducteur marchant est donc placé à gauche de le haie à tailler (non représentée).

Sur ces vues, dans un but de simplification et de clarté des dessins, les tuyauteries hydrauliques utilisées pour alimenter en énergie les différents actionneurs et moteur hydraulique ne sont pas représentées.

Le bras articulé 20 réalise trois fonctions principales :
- une fonction de position en hauteur des moyens de coupe 30 ;
- une fonction de déport latéral des moyens de coupe ;
- une fonction d'orientation d'un plan de coupe des moyens de coupe entre au moins une orientation verticale et une orientation horizontale.

Le bras articulé dans l'exemple illustré comporte trois segments principaux articulés entre eux dans un plan du bras, ledit plan étant sensiblement vertical et sensiblement perpendiculaire à un axe longitudinal X du dispositif.

Le déplacement des moyens de coupe 20 en dehors du plan du bras est assuré par le déplacement dans le sens longitudinal du dispositif 100 mobile.

Un premier segment 21 du bras articulé 20 est solidaire du châssis 10 par une extrémité basse dudit premier segment.

Le premier segment 21 est articulé mobile en rotation sur le châssis 10 autour d'un axe d'inclinaison sensiblement parallèle à l'axe X longitudinal du dispositif de sorte que ledit premier bras peut prendre des positions plus ou moins inclinées latéralement par rapport à un axe vertical de la plate-forme dans le plan du bras.

L'inclinaison latérale du premier segment 21 par rapport à une direction Z verticale dans un système d'axe de la plateforme détermine un angle d'inclinaison I et est contrôlée au moyen d'un actionneur d'inclinaison 211 hydraulique.

Afin de déplacer latéralement l'ensemble d'une partie supérieure du bras articulé 20 entre une position stockée et des positions de travail, le premier segment peut être incliné latéralement des deux côtés de la plate-forme par rapport à la verticale. Avantageusement l'axe d'inclinaison est déporté latéralement sur le châssis par rapport à un axe longitudinal de symétrie dudit châssis du côté du dispositif duquel sont placés les moyens de coupe lors du travail de taille. Le premier segment 21 peut être incliné de chaque côté de la direction Z verticale, par exemple d'un angle de 20° environ, en pratique entre 15 et 30°. L'inclinaison du côté des moyens de coupe est avantageuse pour étendre les possibilités de travail à distance de la plateforme, distance qui peut être augmentée par la présence d'un trottoir ou d'un massif longeant la haie à tailler. L'inclinaison du côté opposé permet de diminuer l'encombrement du bras articulé 20 dans une position stockée.

Un deuxième segment 22 est articulé autour d'un axe d'articulation d'épaule 221 sur le premier segment 21 situé à proximité d'une extrémité haute 212 dudit premier segment opposée à l'extrémité basse.

Le deuxième segment est situé par rapport au premier segment du côté ou se trouve la haie à tailler.

Le premier segment 21 et le deuxième segment 22 déterminent un angle d'épaule E dans le plan du bras articulé 20, ledit angle d'épaule étant contrôlé par un actionneur d'épaule 222 hydraulique.

Dans une position fermée de l'angle d'épaule E, le second segment 22 prenant naissance au niveau de l'axe d'articulation d'épaule 221 est incliné vers le bas, ledit angle d'épaule étant inférieur à 90° et de préférence inférieur à 30° de sorte que ledit deuxième segment se rapproche d'une position parallèle au premier segment.

Dans une position ouverte de l'angle d'épaule E, le second segment 22 est incliné vers le haut, ledit angle d'épaule étant supérieur à 90° et de préférence supérieur à 120°.

En outre le second segment 22 est, suivant une forme de réalisation telle qu'illustrée, monté coulissant sur le premier segment 21 de sorte que la position de l'axe d'articulation d'épaule 221 peut être modifiée en hauteur sur le premier segment pour être plus ou moins proche de l'extrémité haute 212 dudit premier segment. Sur la figure 3 l'axe d'articulation d'épaule 221 est en position haute sur le premier segment 21 et sur la figure 4 l'axe d'articulation d'épaule 221 est dans une position abaissée sur le dit premier segment.

Dans une forme de réalisation, l'axe d'articulation d'épaule 221 est fixé sur un chariot 213 du premier bras qui est déplacé en hauteur par l'intermédiaire d'un actionneur de levage 214 hydraulique.

Le chariot 213 présente une forme en C sur une branche duquel C est fixé l'axe d'articulation d'épaule 221 et sur l'autre branche duquel C l'actionneur d'épaule 222 prend appui pour modifier l'angle d'épaule E formé entre le premier et le deuxième bras.

Dans une forme de réalisation, l'actionneur de levage 214 prend appui sur le premier segment au niveau d'un point d'articulation bas 215 dudit actionneur de levage, lequel point d'articulation bas comporte au moins deux positions en hauteur sur le premier segment.

Suivant cet agencement, il est possible d'obtenir des positions extrêmes haute et basse de l'axe d'articulation 221 dont une distance de séparation est supérieure à la course possible de l'actionneur de levage 214. Le changement de la position en hauteur du point d'articulation bas 215 de l'actionneur de levage est par exemple réalisé manuellement au moyen d'une came 216, avant d'entreprendre un travail avec le dispositif.

Un troisième segment 23 est articulé par rapport au deuxième segment 22 autour d'un axe d'articulation de coude 231 situé au niveau d'une extrémité dudit deuxième segment distante de l'axe d'articulation d'épaule 221 dudit deuxième segment.

Le deuxième segment 22 et le troisième segment 23 déterminent un angle de coude C dans le plan du bras articulé 20, ledit angle de coude étant contrôlé par un actionneur de coude 232 hydraulique.

Dans une position intermédiaire de l'angle de coude C, les deuxième et troisième segments sont sensiblement alignés, c'est à dire que l'angle de coude est voisin de 180°. Dans une position ouverte maximale l'angle de coude C est supérieur à 180° et de préférence égal ou supérieur à 210° et dans une position fermée l'angle de coude C est inférieur à 180° et de préférence inférieur ou égal à 150°.

Les moyens de coupe 30 de l'exemple illustré consistent en un lamier comportant trois lames 32 tournantes, visible sur la figure 2, juxtaposées dans un plan de coupe suivant une longueur du lamier et entraînées par un moteur hydraulique 31.

Pour assurer le maintien des lames 32 et également pour des raisons de sécurité, le lamier comporte également un carter 33 qui assure la protection des lames et évite les projections de débris végétaux coupés vers le conducteur marchant du dispositif 100.

La juxtaposition des lames 32, trois dans l'exemple illustré, permet d'obtenir une largeur de coupe, sensiblement la longueur du lamier, plus importante que celle d'une lame unique et permet de réaliser un travail plus rapide en limitant le nombre de passes pour réaliser une taille.

D'autres types de moyens de coupe sont possibles, en particulier un lamier avec plus ou moins de lames ou une cisaille.

Les moyens de coupe 30 sont articulés, dans l'exemple de réalisation illustré, autour d'un axe d'articulation de poignet 311 situé au niveau d'une extrémité du troisième segment 23 distante de l'axe d'articulation de coude 231 dudit troisième segment.

Le troisième segment 23 et les moyens de coupe 30 pris suivant la longueur des moyens de coupe 30 déterminent un angle de poignet P dans le plan du bras articulé 20, ledit angle de poignet étant contrôlé par un actionneur de poignet 312 hydraulique.

Dans une forme de réalisation, comme dans l'exemple illustré sur les différentes figures, l'axe d'articulation de poignet 311 est situé sur les moyens de coupe 30 du côté d'une extrémité de la longueur des dits moyens de coupe de telle sorte que, lorsque les moyens de coupe sont dans une position sensiblement horizontale du plan de coupe, les lames 32 orientées vers le sol par rapport au carter 33, une partie de la longueur des moyens de coupe 30 située à l'opposé de la plate-forme 10 par rapport à l'axe d'articulation de poignet 311 soit plus grande qu'une partie situé du côté de ladite plate-forme par rapport audit axe d'articulation de poignet.

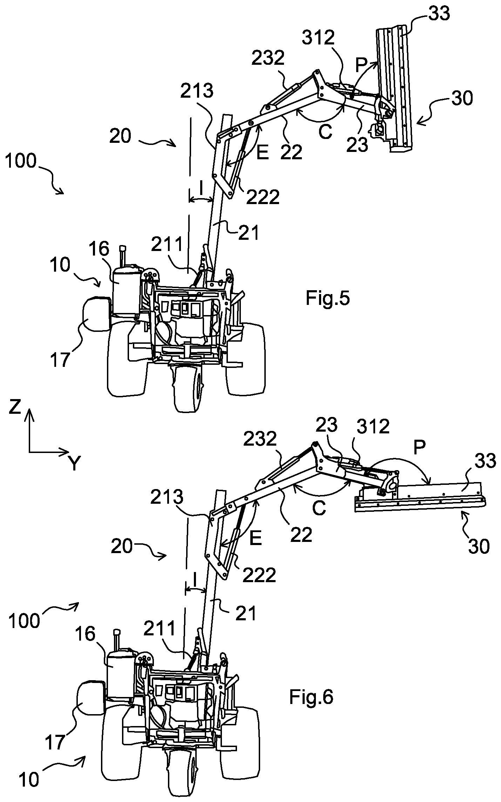

Ainsi, comme dans la situation illustrée sur la figure 6, une partie fonctionnelle des moyens de coupe 30 placés en position horizontale se trouve principalement du côté opposé à la plate-forme ce qui permet un meilleur dégagement latéral du conducteur marchant pour tailler le dessus d'une haie.

En outre, comme dans la situation illustrée sur la figure 5, la partie travaillante des moyens de coupe 30 en position verticale de trouve principalement au-dessus de l'axe d'articulation de poignet 311 ce qui permet de réaliser des coupes sur des haie hautes sans nécessairement exiger des longueurs plus importantes des différents segments 21, 22, 23 du bras articulé 20.

Dans une position ouverte maximale, la longueur du dispositif de coupe 30 et le troisième segment sont sensiblement alignés, ce qui correspond sensiblement à une angle de poignet de 180°, pour le moins un angle d'au moins 130°.

Dans la position fermée, la longueur du dispositif de coupe 30, dont une face de travail est située à l'opposé du troisième segment 23, et ledit troisième segment forment un angle de poignet P aussi réduite que possible, en pratique inférieur à 45°, par exemple 20°.

Comme il est illustré sur les différentes figures montrant le bras articulé 20 et les moyens de coupe 30 dans diverses positions, il est possible, par un choix adapté, lors de la conception du dispositif 100, des longueurs des différents segments du bras articulé 20, de réaliser des tailles de haie dans un plan vertical et dans un plan horizontal depuis la surface du sol jusqu'à une hauteur importante, sensiblement supérieure à la hauteur du premier segment 21.

Par le truchement de l'inclinaison du premier segment 21 et des angles entre les premier et deuxième segments d'une part, entre les deuxième et troisième segments d'autre part il possible au conducteur marchant de choisir une distance entre le dispositif et la haie en cours de taille adaptée à la place disponible et à ses contraintes de déplacement suivant le sens longitudinal de la haie, le plan de coupe des moyens de coupe 30 pouvant être très proche de la verticale du bord de la plateforme lorsque la place disponible est réduite entre la haie à tailler et un obstacle.

Le conducteur marchant dispose avantageusement d'organes de commande agencés par exemple sur un tableau de commande du poste de conduite ou sur des poignées du guidon 15 pour agir sur les différents actionneurs et modifier à sa convenance les angles entre les segments et les moyens de coupe.

Dans une forme de réalisation d'un prototype ayant donné des résultats opérationnels satisfaisant, les caractéristiques géométriques du dispositif 100 sont les suivantes :
- voie de la plate-forme au niveau de l'essieu des roues principales = 1,20 mètre
- hauteur par rapport au sol de l'axe d'articulation d'épaule 221 mobile sur le premier segment = 1,4m au plus bas, 2m au plus haut
- angle d'inclinaison I du premier segment par rapport à la verticale = 26° en direction des moyens de coupe, 18° dans la direction opposée
- longueur du deuxième segment entre l'axe d'articulation d'épaule 221 et l'axe d'articulation de coude 231 = 1,1m
- angle d'épaule E = 25° minimum (fermé), 130° maximum (ouvert)
- longueur du troisième segment entre l'axe d'articulation de coude 231 et l'axe d'articulation de poignet 331 = 0,9m
- angle de coude C = 55° minimum (fermé), 140° maximum (ouvert)
- longueur du lamier = 1,3m
- angle de poignet = 12° minimum (fermé), 170° maximum (ouvert)

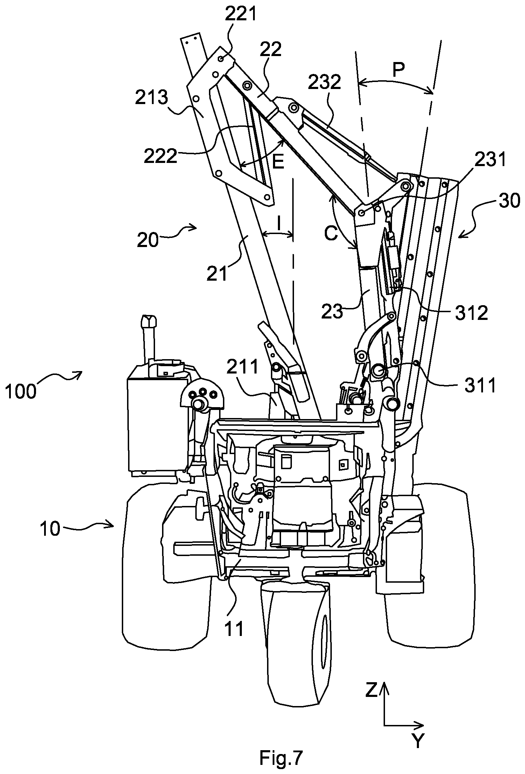

Dans une position stockée du bras articulé 20, comme celle illustrée sur la figure 7, la largeur totale du dispositif correspond à celle de la voie de la plate-forme et sa hauteur au-dessus du sol est déterminée par celle du point haut du premier segment, environ 2m dans l'exemple de réalisation.

Dans la position déployée en hauteur, le plan de coupe du lamier, toujours dans l'exemple de réalisation, peut être amené jusqu'à environ 3m au-dessus du sol.

Afin d'assurer un équilibre constant du dispositif 100 dans les différentes positions possibles du bras articulé 20, les différents équipements dudit dispositif sont répartis sur le châssis afin que leurs masses respectives équilibrent les masses mobiles du bras et que la répartition du poids total entre les roues principales 12 et l'au moins une roue secondaire 13 assure que le dispositif puisse être dirigé sans effort excessif. Ce résultat est généralement obtenu en répartissant le poids majoritairement sur les roues principales.

Les équipements pouvant être déportés par rapport à une ligne médiane longitudinale de la plate-forme 10 sont agencés sur un côté de ladite plate-forme opposé au côté duquel sont déportés les moyens de coupe lors de l'utilisation du dispositif 100. Cet agencement permet de compenser le couple de renversement latéral induit par un déport important, dans certaines situations, des moyens de coupe 30 par rapport à la plate-forme 10 étroite par conception, par exemple comme dans les situations illustrées sur les figures 5 et 6.

Ainsi un réservoir de fluide hydraulique 16, dont le poids fluide compris avoisine les 40kg dans l'exemple de réalisation décrit, contenant le fluide nécessaire au fonctionnement des équipements hydrauliques, actionneurs pour les mouvements du bras articulé et moteur hydraulique 31 du lamier, est situé sur un bord de la plate-forme sans toutefois dépasser la largeur de la voie pour que le dispositif reste le plus étroit possible.

Autant que de besoin un contrepoids 17 amovible est fixé au châssis pour augmenter le couple de rappel résultant de l'agencement des équipements sur ledit châssis. Un tel contrepoids 17 est fixé pour être en porte à faux de sorte à augmenter son bras de levier et en limiter la masse. Le dépassement n'a pas nécessairement un effet critique sur la largeur de la plate-forme dans la mesure où ledit contrepoids est avantageusement démonté par des moyens de fixation rapide pendant le transport du dispositif 100.

Dans une forme de réalisation le ou les équipements agencés latéralement pour participer à l'équilibre latéral des masses, et le cas échéant un contrepoids amovible ou non amovible, sont montés sur un support mobile solidaire de la plate-forme.

Dans une forme de réalisation le support mobile est mobile sur des glissières transversales de sorte à pouvoir être déplacé latéralement avec les équipements pesants qui lui sont fixés, d'autre forme de support mobile étant possible tel que par exemple un système à bras articulés, simple ou du type à pantographe.

Ainsi il est possible pour l'utilisateur du dispositif 100 de déplacer sur les glissières le support depuis une position stockée pour le transport du dispositif 100 dans laquelle le support est au-dessus du châssis vers une position de travail dans laquelle le support est en porte à faux, au moins en partie, par rapport à la plate-forme 10, chaque position pouvant être verrouillée par un moyen de blocage adapté.

Dans un mode préféré de réalisation de cette forme du dispositif, la position du support mobile sur les glissières est déterminée par une bielle qui est articulée sur le premier segment 21 du mat porteur 20 en un point dudit premier segment situé sous l'axe d'inclinaison.

Suivant ce mode de réalisation, le support et la masse des équipements qu'il porte se déplacent dans la direction opposée du déplacement de l'extrémité haute 212 du premier segment 21, réalisant ainsi un équilibrage dynamique en fonction des mouvements du bras articulé.

La distance entre l'axe d'inclinaison et un point d'articulation de la bielle du support mobile détermine un rapport d'automaticité entre les parties mobiles. D'autre solution mécanique permettent d'obtenir un tel résultat, par exemple des couplages par chaînes ou par câbles, ou encore par des pistons hydrauliques.

Dans un exemple de réalisation, le support mobile équipé représente une masse d'environ 50Kg qui peut être comparée à une masse d'environ 15Kg pour le lamier et se déplace de 0,3m pour un déplacement angulaire du premier segment 21 de 40°.

L'homme du métier est en mesure avec ses connaissances générales de combiner ces différents modes de réalisation pour aboutir aux conditions d'équilibrage souhaitées.

Suivant un mode alternatif de réalisation, non représenté, les roues principales, motrices, sont situées à l'arrière du dispositif, c'est à dire du côté du conducteur marchant suiveur du dispositif, et les roues secondaires mobiles en orientation sont situées à l'avant.

Dans ce mode de réalisation, pour obtenir un polygone de sustentation suffisamment large à l'avant et compenser le fait que le mat articulé se trouve plus rapproché des roues secondaires que dans le mode décrit précédemment, le dispositif comporte deux roues secondaires dont la voie est sensiblement celle des roues principales au moins en condition de transport.

Dans un mode de réalisation particulier, une roue auxiliaire, située du côté de la plate-forme vers lequel le bras articulé est déployé, est fixée sur un essieu extensible de sorte que l'utilisateur du dispositif peut, avant de commencer un travail, augmenter la voie de l'essieu avant en élargissant celle-ci du côté de la zone de travail.

Le dispositif est susceptible de variantes sans se démarquer de la présente invention.

En particulier la solution illustrée correspond à des vérins ou moteur hydraulique pour les divers actionneurs. Cependant, d'autres technologies d'actionneurs peuvent être utilisées comme par exemple des actionneurs pneumatiques ou des actionneurs électriques, sous réserve de générer la puissance nécessaire sous la forme correspondante.

En particulier la commande séparée des différents actionneurs peut être remplacée par des commandes d'un niveau supérieur, par exemple des commandes correspondant à des ordres de déplacement du plan du lamier, les ordres nécessaires pour obtenir le mouvement commandé du lamier étant envoyés à chacun des actionneurs par une logique de commande recevant par ailleurs des signaux de position des différents segments du bras articulé.

L'homme du métier peut également envisager de réaliser un mat articulé comportant plus ou moins de segments que l'exemple décrit.

Dans une forme simplifiée de réalisation, l'axe d'articulation d'épaule 221 est fixe en hauteur sur le premier segment 21. Dans ce cas, il pourra être préféré de réaliser des deuxième et troisième segments de longueurs adaptées pour obtenir les possibilité souhaitées de positionnement des moyens de coupe 30 sans modification de la hauteur de l'axe d'articulation.

Egalement dans une forme simplifiée de réalisation, le bras articulé 21 ne comporte pas de troisième segment et les moyens de coupe 30 sont articulés directement sur le deuxième segment 22, les articulations de coude et de poignée étant alors confondues. Ici encore la longueur du deuxième segment, ainsi que les angles possibles pour les différentes articulations du bras articulé, auront avantages à être adaptés pour permettre d'atteindre les positions souhaitées des moyens de coupe.

Dans une autre forme de réalisation, non représentée, la ou les roues orientables sont couplées au guidon 15 de sorte à être orientée par le guidon lui même.

Le dispositif de l'invention permet de réaliser des travaux de taille de haies végétales dans des lieux d'accès limité dans des conditions particulièrement ergonomique pour un opérateur du dispositif.

Les conditions de travail optimales y compris pour des haies de hauteur importante permettent à un opérateur de travailler sur des périodes continues sans fatigue excessive.

Le dispositif de dimensions réduites et de puissance relativement importante pour un dispositif à conducteur marchant permet également de travailler plus rapidement qu'avec des dispositifs conventionnels.

## Revendications

1. Dispositif (100) à conducteur marchant pour la taille des haies végétales comportant une plate-forme (10) automobile avec deux roues principales (12) couplées à un moteur (14) et au moins une roue secondaire (13) orientable, **caractérisé en ce qu'**un poste de conduite pour le conducteur marchant est agencé à l'arrière de la plateforme (10), ledit poste de conduite comportant un guidon (15) fixé rigidement à un châssis (11) de ladite plateforme (10) destiné à être maintenu par le conducteur marchant derrière le dispositif (100), et **en ce qu'**un bras articulé (20) solidaire de la plate-forme (10), en avant du poste de conduite, comporte des segments articulés dans un plan du bras sensiblement vertical et sensiblement perpendiculaire à un axe longitudinal X du dispositif, ledit bras articulé comportant :
- un premier segment (21) sensiblement vertical, mobile en rotation par rapport au châssis (11) autour d'un axe d'articulation d'inclinaison sensiblement parallèle à l'axe longitudinal X de la plate-forme (10) de sorte à permettre une inclinaison (I) latérale du premier segment entre des positions inclinées situées de part et d'autre d'une position verticale ;
- un deuxième segment (22), articulé sur le premier segment (21) autour d'un axe d'articulation d'épaule (221) sensiblement parallèle à l'axe longitudinal X de la plate-forme (10) pour former un angle d'épaule (E) modifiable entre le premier et le deuxième segment, ledit angle d'épaule s'ouvrant en direction d'un côté de la plate-forme (10) où se trouve les moyens de coupe (30) en condition de travail ;
et dans lequel des moyens de coupe (30), dont une longueur détermine sensiblement une largeur de coupe, sont articulés à une extrémité libre du bras articulé (20) autour d'un axe d'articulation de poignet (311) sensiblement parallèle à l'axe longitudinal X de la plate-forme (10) pour former un angle de poignet (P) modifiable entre un segment d'extrémité dudit bras articulé et les moyens de coupe.

2. Dispositif suivant la revendication 1 dans lequel l'angle d'inclinaison (I) est modifiable entre une position verticale à zéro degré et au moins quinze degrés de chaque coté de ladite position verticale dans un plan transversal sensiblement perpendiculaire à la direction longitudinale X.

3. Dispositif suivant la revendication 2 dans lequel :
- l'angle d'épaule (E) est modifiable entre une position fermée dans laquelle ledit angle d'épaule est minimal, de valeur inférieure à quatre vingt dix degrés et de préférence inférieur à trente degrés, et une position ouverte maximale dans la laquelle ledit angle d'épaule est de valeur supérieure à quatre vingt dix degrés et de préférence supérieure à cent vingt degrés ;
- l'angle de poignet (G) est modifiable entre une position fermée dans lequel ledit angle de poignet est minimal, de valeur inférieure ou égale à quarante cinq degrés et de préférence inférieur à vingt degrés, et une position ouverte maximale dans laquelle ledit angle de poignet est égal ou supérieur à cent trente degrés, de préférence sensiblement cent quatre vingt degrés.

4. Dispositif suivant l'une des revendications précédentes dans lequel le bras articulé (20) comporte un troisième segment (23), articulé sur le deuxième segment (22) autour d'un axe d'articulation de coude (231) sensiblement parallèle à l'axe longitudinal X de la plate-forme (10) pour former un angle de coude (C) modifiable entre le deuxième et le troisième segment entre une position ouverte maximale, par exemple avec un angle de coude (C) égal ou supérieur à cent quatre vingt degrés, et une position fermée, par exemple avec un angle de coude (C) strictement inférieur à cent quatre vingt degrés, telle que l'axe de poignet (311) est descendu par rapport à la position ouverte maximale.

5. Dispositif suivant l'une des revendications précédentes dans lequel l'axe d'articulation d'épaule (221) est mobile en hauteur sur le premier segment (21).

6. Dispositif suivant la revendication 5 dans lequel l'axe d'articulation est déplacé au moyen d'un actionneur de levage (214) et ou d'une came (216) à actionnement manuel.

7. Dispositif suivant l'une des revendications précédentes dans lequel chacun des angles d'inclinaison (I), d'épaule (E),de poignet (P), et de coude (C) lorsque pris par la revendication 4, est modifié au moyen d'un actionneur.

8. Dispositif suivant l'une des revendications précédentes dans lequel un ou des équipements sont agencés sur le châssis (11) déportés latéralement par rapport à un axe de symétrie longitudinal dudit châssis d'un côté du dit châssis opposé au côté duquel est réalisé le travail de taille.

9. Dispositif suivant la revendication 8 dans lequel un support d'équipements est mobile latéralement sur le châssis (11).

10. Dispositif suivant la revendication 9 dans lequel le support d'équipement est solidaire du premier segment (21) de sorte à être déplacé latéralement sur le châssis (11) dans une direction opposée au sens dans lequel ledit premier segment est incliné.

11. Dispositif suivant l'une des revendications précédentes comportant deux roues secondaires agencées sur un essieu avant de la plate-forme et déterminant une voie de l'essieu avant.

12. Dispositif suivant la revendication 11 dans lequel la voie de l'essieu avant comporte une position élargie d'un côté de la plate-forme (10) correspondant au côté duquel est réalisé le travail de taille.

## Patentansprüche

1. Vorrichtung (100) mit mitlaufendem Bediener zum Schneiden pflanzlicher Hecken, umfassend eine selbstfahrende Plattform (10) mit zwei Haupträdern (12), die an einen Motor (14) gekoppelt sind, und mindestens einem lenkbaren Zweitrad (13), **dadurch gekennzeichnet, dass** ein Bedienungsstand für den mitlaufenden Bediener hinten an der Plattform (10) angeordnet ist, wobei der Bedienungsstand einen Lenker (15) umfasst, der fest an einem Gestell (11) der Plattform (10) angebracht ist, der dazu bestimmt ist, von dem mitlaufenden Bediener hinter der Vorrichtung (100) gehalten zu werden, und dadurch, dass vor dem Bedienungsstand ein angelenkter Arm (20), der mit der Plattform (10) fest verbunden ist, angelenkte Segmente in einer Ebene des Arms umfasst, die im Wesentlichen vertikal und im Wesentlichen senkrecht zu einer Längsachse X der Vorrichtung ist, wobei der angelenkte Arm Folgendes umfasst:
- ein erstes Segment (21), das im Wesentlichen vertikal ist, drehbar beweglich bezogen auf das Gestell (11) um eine Gelenkachse ist, die im Wesentlichen parallel zur Längsachse X der Plattform (10) geneigt ist, um eine seitliche Neigung (I) des ersten Segments zwischen geneigten Positionen zu erlauben, die beiderseits einer vertikalen Position liegen;
- ein zweites Segment (22), das auf dem ersten Segment (21) um eine Schultergelenkachse (221) angelenkt ist, die im Wesentlichen parallel zur Längsachse X der Plattform (10) ist, um einen veränderbaren Schulterwinkel (E) zwischen dem ersten und dem zweiten Segment zu bilden, wobei sich der Schulterwinkel in Richtung einer Seite der Plattform (10) öffnet, wo sich unter Arbeitsbedingungen die Schneidmittel (30) befinden;
und wobei Schneidmittel (30), wovon eine Länge im Wesentlichen eine Schnittbreite bestimmt, an ein freies Ende des Gelenkarms (20) um eine Handgelenkachse (311) angelenkt sind, die im Wesentlichen parallel zu der Längsachse X der Plattform (10) verläuft, um einen Handgelenkwinkel (P) zu bilden, der zwischen einem Endsegment des Gelenkarms und den Schneidmitteln veränderbar ist.

2. Vorrichtung nach Anspruch 1, wobei der Neigungswinkel (I) zwischen einer vertikalen Position bei null Grad und mindestens fünfzehn Grad auf jeder Seite der vertikalen Position in einer Querebene veränderbar ist, die im Wesentlichen senkrecht zu der Längsrichtung X ist.

3. Vorrichtung nach Anspruch 2, wobei:
- der Schulterwinkel (E) zwischen einer geschlossenen Position, in der der Schulterwinkel minimal, unter einem Wert von neunzig Grad und vorzugsweise kleiner als dreißig Grad ist, und einer maximalen geöffneten Position, in der der Schulterwinkel über einem Wert von neunzig Grad und vorzugsweise über hundertzwanzig Grad liegt, veränderbar ist;
- der Handgelenkwinkel (G) zwischen einer geschlossenen Position, in der der Handgelenkwinkel minimal, unter oder gleich einem Wert von fünfundvierzig Grad und vorzugsweise kleiner als zwanzig Grad ist, und einer maximalen geöffneten Position, in der der Handgelenkwinkel größer oder gleich hundertdreißig Grad, vorzugsweise im Wesentlichen hundertachtzig Grad ist, veränderbar ist.

4. Vorrichtung nach einem der vorhergehenden Ansprüche, wobei der Gelenkarm (20) ein drittes Segment (23) umfasst, das auf dem zweiten Segment (22) um eine Ellenbogen-Gelenkachse (231) angelenkt ist, die im Wesentlichen parallel zu der Längsachse X der Plattform (10) verläuft, um einen Ellenbogenwinkel (C) zu bilden, der zwischen dem zweiten und dem dritten Segment zwischen einer maximalen geöffneten Position, beispielsweise mit einem Ellenbogenwinkel (C) größer oder gleich hundertachtzig Grad, und einer geschlossenen Position, beispielsweise mit einem Ellenbogenwinkel (C) strikt kleiner als hundertachtzig Grad, derartig veränderbar ist, dass die Handgelenkachse (311) bezogen auf die maximale geöffnete Position heruntergelassen ist.

5. Vorrichtung nach einem der vorhergehenden Ansprüche, wobei die Schultergelenkachse (221) auf dem ersten Segment (21) in der Höhe beweglich ist.

6. Vorrichtung nach Anspruch 5, wobei die Gelenkachse mittels eines Hebeglieds (214) und oder eines Handbetätigungs-Nockens (216) bewegt wird.

7. Vorrichtung nach einem der vorhergehenden Ansprüche, wobei der Neigungs- (I), Schulter- (E), Handgelenk- (P) und Ellenbogenwinkel gemäß Anspruch 4 jeweils mittels eines Stellglieds verändert wird.

8. Vorrichtung nach einem der vorhergehenden Ansprüche, wobei eine oder mehrere Einrichtungen auf dem Gestell (11) seitlich versetzt bezogen auf eine Symmetrieachse in Längsrichtung des Gestells einer Seite des Gestells angeordnet ist bzw. sind, die der Seite gegenüberliegt, auf der die Schneidarbeit ausgeführt wird.

9. Vorrichtung nach Anspruch 8, wobei ein Einrichtungsträger auf dem Gestell (11) seitlich beweglich ist.

10. Vorrichtung nach Anspruch 9, wobei der Einrichtungsträger mit dem ersten Segment (21) funktionell verbunden ist, um auf dem Gestell (11) seitlich in eine Richtung bewegt zu werden, die der Richtung, in die das erste Segment geneigt ist, entgegengesetzt ist.

11. Vorrichtung nach einem der vorhergehenden Ansprüche, umfassend zwei Zweiträder, die auf einer vorderen Achse der Plattform angeordnet sind und eine Spurweite der vorderen Achse bestimmen.

12. Vorrichtung nach Anspruch 11, wobei die Spurweite der Vorderachse auf einer Seite der Plattform (10) eine verbreiterte Position umfasst, die der Seite entspricht, auf der die Schneidarbeit ausgeführt wird.

## Claims

1. Walking-driver-operated device (100) for cutting hedges, comprising an automobile platform (10) with two main wheels (12) coupled to an engine (14) and at least one steerable secondary wheel (13), **characterized in that** a driver's station for the walking driver is arranged at the rear of the platform (10), said driver's station comprising a handlebar (15) fixed rigidly to a chassis (11) of said platform (10) and intended to be held by the driver walking behind the device (100), and **in that** an articulated arm (20) secured to the platform (10), in front of the driver's station, comprises articulated segments in a plane of the arm which is substantially vertical and substantially perpendicular to a longitudinal axis X of the device, said articulated arm comprising:
- a first substantially vertical segment (21) which is rotatable with respect to the chassis (11) about an inclination axis of articulation substantially parallel to the longitudinal axis X of the platform (10) so as to allow a lateral inclination (1) of the first segment between inclined positions situated on either side of a vertical position;
- a second segment (22) articulated on the first segment (21) about a shoulder axis of articulation (221) substantially parallel to the longitudinal axis X of the platform (10) so as to form a shoulder angle (E) which can be modified between the first and the second segment, said shoulder angle opening in the direction of a side of the platform (10) where the cutting means (30) are situated in the working condition;
and in which cutting means (30), a length of which substantially determines a cutting width, are articulated at a free end of the articulated arm (20) about a wrist axis of articulation (311) substantially parallel to the longitudinal axis X of the platform (10) so as to form a wrist angle (P) which can be modified between an end segment of said articulated arm and the cutting means.

2. Device according to Claim 1, in which the angle of inclination (I) can be modified between a vertical position at zero degree and at least fifteen degrees on each side of said vertical position in a transverse plane substantially perpendicular to the longitudinal direction X.

3. Device according to Claim 2, in which:
- the shoulder angle (E) can be modified between a closed position in which said shoulder angle is minimal, with a value less than ninety degrees and preferably less than thirty degrees, and a maximum open position in which said shoulder angle has a value greater than ninety degrees and preferably greater than one hundred and twenty degrees;
- the wrist angle (G) can be modified between a closed position in which said wrist angle is minimal, with a value less than or equal to forty five degrees and preferably less than twenty degrees, and a maximum open position in which said wrist angle is equal to or greater than one hundred and thirty degrees, preferably substantially one hundred and eighty degrees.

4. Device according to one of the preceding claims, in which the articulated arm (20) comprises a third segment (23) articulated on the second segment (22) about an elbow axis of articulation (231) substantially parallel to the longitudinal axis X of the platform (10) so as to form an elbow angle (C) which can be modified between the second and the third segment between a maximum open position, for example with an elbow angle (C) equal to or greater than one hundred and eighty degrees, and a closed position, for example with an elbow angle (C) strictly less than one hundred and eighty degrees, such that the wrist axis (311) is lowered with respect to the maximum open position.

5. Device according to one of the preceding claims, in which the shoulder axis of articulation (221) is movable in height on the first segment (21).

6. Device according to Claim 5, in which the axis of articulation is moved by means of a lifting actuator (214) and/or a manually actuated cam (216) .

7. Device according to one of the preceding claims, in which each of the inclination (I), shoulder (E), wrist (P) and elbow (C) angles, when considered in relation to Claim 4, is modified by means of an actuator.

8. Device according to one of the preceding claims, in which one or more equipment items are arranged on the chassis (11) with a lateral offset with respect to a longitudinal axis of symmetry of said chassis on a side of said chassis opposite the side on which the cutting work is carried out.

9. Device according to Claim 8, in which an equipment support is movable laterally on the chassis (11).

10. Device according to Claim 9, in which the equipment support is functionally linked to the first segment (21) so as to be moved laterally on the chassis (11) in an opposite direction to the direction in which said first segment is inclined.

11. Device according to one of the preceding claims, comprising two secondary wheels arranged on a front axle of the platform and determining a track of the front axle.

12. Device according to Claim 11, in which the track of the front axle comprises a widened position on a side of the platform (10) corresponding to the side on which the cutting work is carried out.
